# EUROPÄISCHE PATENTSCHRIFT

(11) **EP 3 270 123 B1**
(45) Veröffentlichungstag und Bekanntmachung des Hinweises auf die Patenterteilung: **24.06.2020**
(21) Anmeldenummer: 16178887.2
(22) Anmeldetag: 11.07.2016
(51) Int. Cl.: G01F 23/288

(54) **RADIOMETRISCHES MESSGERÄT FÜR ZWEILEITERBETRIEB**
RADIOMETRIC MEASURING DEVICE FOR TWO-WIRE OPERATION
APPAREIL DE MESURE RADIOMETRIQUE POUR FONCTIONNEMENT EN DEUX FILS

(43) Veröffentlichungstag der Anmeldung: 17.01.2018
(73) Patentinhaber: VEGA Grieshaber KG, 77709 Wolfach (DE)
(72) Erfinder: KÖRNLE, Ralf, 77736 Zell a.H. (DE)
(74) Vertreter: Maiwald Patent- und Rechtsanwaltsgesellschaft mbH

(56) Entgegenhaltungen:
- EP-A1- 2 228 632
- DE-A1- 10 132 267
- DE-A1-102007 053 860

## Beschreibung

### Gebiet der Erfindung

Die Erfindung betrifft die radiometrische Füllstandmessung, die radiometrische Dichtemessung, die radiometrische Grenzstandmessung und die radiometrische Durchsatzmessung. Insbesondere betrifft die Erfindung ein radiometrisches Messgerät mit einem Szintillator und einem Lichtdetektor sowie ein Verfahren zum Messen eines Füllstands, einer Dichte, eines Grenzstands oder eines Durchsatzes mit einem radiometrischen Messgerät.

### Hintergrund

Bei der radiometrischen Füllstand-, Grenzstand-, Dichte- oder Durchsatzmessung mit einem Szintillator erzeugt ein von einem radioaktiven Strahler durch das Füllgut gelangendes Gammaquant (oder eine andere radioaktive Strahlung) im Szintillator einen Lichtpuls. Dieser Lichtpuls wird dann zum Beispiel mithilfe eines Photomultipliers (PMT), einer Avalanche-Photodiode (APD) oder mithilfe eines Siliziumphotomultipliers (SiPM) in elektrische Pulse umgewandelt. Diese Signale werden dann von einer Auswerteschaltung ausgewertet, um den Füllstand, den Grenzstand, die Dichte oder den Durchsatz zu bestimmen.

Die DE 10 2007 053 860 A1 zeigt ein radiometrisches Messgerät, das einen Szintillator und einen Photomultiplier umfasst. Auf den Szintillator auftreffende radiometrische Strahlung erzeugt im Szintillationsmaterial Lichtblitze. Diese werden durch den Photomultiplier erfasst und in elektrische Impulse umgesetzt, die als elektrisches Ausgangssignal eines Detektors, welcher den Photomultiplier umfasst, zur Verfügung stehen. Eine Steuerung nimmt den Photomultiplier ausschließlich während Messphasen in Betrieb, wobei die Steuerung die Messphasen in Abhängigkeit von in einer im Messgerät über ein Leitungspaar und einen Energiespeicher zur Verfügung stehenden Energie die Messphasen auslöst, während denen das Messgerät die physikalische Messgröße misst.

Die EP 2 228 632 A1 offenbart ein Messgerät mit einer Zweileiterversorgung für eine radiometrische Füllstand- und/oder Dichtemessung eines Füllguts mit einem Prozessor, wobei der Prozessor zum Wechseln von einem Aktivmodus in einen Stromsparmodus ausgeführt ist. Da bei dem Messgerät in Zweileiterausführung nur eine begrenzte Leistung zur Verfügung steht, kann durch eine dynamische Anpassung der Leistungsaufnahme an die zur Verfügung stehende Leistung (Powermanagement) eine Reduzierung der Leistungsaufnahme erzielt werden.

### Zusammenfassung der Erfindung

Aufgaben der Erfindung sind zum einen, den Energiebedarf bei der radiometrischen Messung mit einer Szintillator-Lichtdetektor-Anordnung zu verringern. Weiterhin soll die Lebensdauer von Bauteilen, insbesondere die der lichtdetektierenden Elemente, verlängert werden.

Diese Aufgaben werden durch die Gegenstände der unabhängigen Patentansprüche gelöst. Weiterbildungen der Erfindung ergeben sich aus den Unteransprüchen und der folgenden Beschreibung.

Ein erster Aspekt der Erfindung betrifft ein radiometrisches Messgerät, welches einen oder mehrere Szintillatoren und einen oder mehrere Lichtdetektoren aufweist. Der oder die Szintillatoren dienen der Umwandlung von auf den entsprechenden Szintillator auftreffender radioaktiver Strahlung in Licht, welches dann von dem Lichtdetektor in ein entsprechendes elektrisches Signal gewandelt wird. Hierbei handelt es sich typischerweise um einen Strompuls. Dieser wird mittels einer geeigneten Schaltung in einen Spannungspuls umgewandelt. Gleichzeitig kann eine Filterung des Pulses erfolgen.

Es ist eine Auswerteschaltung vorgesehen, in welcher die Strompulse des Lichtdetektors eingehen und ausgewertet werden, um daraus den Füllstand, Grenzstand, die Dichte oder den Durchsatz zu bestimmen. In anderen Worten handelt es sich bei dem Messgerät um ein Füllstandmessgerät, ein Grenzstandmessgerät, ein Dichtemessgerät oder ein Durchsatzmessgerät. Darüber hinaus ist eine Schaltung vorgesehen, mit welcher der Lichtdetektor und/oder die Auswerteschaltung zeitweise an- und abgeschaltet werden können. Die An- und Abschaltung kann periodisch erfolgen oder nach Erfassung von zwei oder mehr Signalen. Sie kann aber auch in Abhängigkeit vom Eingangssignal oder in anderer Weise erfolgen. Insbesondere kann vorgesehen sein, dass die Abschaltung nach Erzeugung eines elektrischen Signals erfolgt, das statistisch auftritt.

Der Zeitraum, währenddessen der Lichtdetektor und/oder die Auswerteschaltung abgeschaltet sind, und/oder der Zeitpunkt des Abschaltens können von dem Messgerät festgelegt werden, und es kann vorgesehen sein, dass dieser Zeitraum und/oder dieser Zeitpunkt sich während dem Messbetrieb ändern. Der Zeitraum kann vom Gerät genutzt werden, um Energie für den Betrieb des Lichtdetektors und der Auswerteschaltung zu sammeln bzw. eine Auswertung des Meßergebnisses vorzunehmen. Das Abschalten kann direkt im Anschluß an die Erfassung eines Meßpulses erfolgen. Dies hat den Vorteil, daß die Leistungsaufnahme bei größer werdender Zählrate kleiner werden kann, weil das Verhältnis von An- zu Abschaltzeit kleiner wird. Andererseits kann man auch die Leistungsaufnahme konstant halten, indem das Verhältnis von An- zu Abschaltzeit konstant gehalten wird.

Auf diese Weise kann vermieden werden, dass es zu einer Unterversorgung des Lichtdetektors und der Auswerteschaltung kommt, da diese beiden Einheiten erst dann wieder angeschaltet werden, wenn ausreichend Energie für deren Betrieb gesammelt ist.

Weiterhin wird die Zeitdauer unabhängig von der zur Verfügung stehenden Leistung so gewählt, daß sich eine Leistungsaufnahme ergibt, die kleiner oder gleich der minimal zur Verfügung stehenden Leistung ist. Diese ergibt sich beim 4...20mA Zweidrahtmeßgerät aus minmaler Versorgungsspannung, beispielsweise Umin = 9.6V und Imin = 3.6mA (dies entspricht dem Störstrom bei einem 4...20mA Messgerät). Vorteil dieser Methode ist es, daß die Ermittlung des Meßwerts unabhängig von der zur Verfügung stehenden Leistung ist.

Die Auswerteschaltung umfasst beispielsweise einen Verstärker zum Verstärken der Spannungspulse des Lichtdetektors. Es kann vorgesehen sein, dass hinter dem Verstärker der Signalverlauf der resultierenden Pulse abgegriffen wird. Hierfür können ein oder mehrere Diskriminatoren vorgesehen sein. Am Ausgang der Diskriminatorschaltung kann sich ein Mikroprozessor oder Mikrocontroller befinden, der die zur Meßwertbestimmung notwendigen Berechnungen vornimmt.

Durch das zeitweise Abschalten und Anschalten des Lichtdetektors und/oder der Auswerteschaltung ist es möglich, die Leistungsaufnahme des radiometrischen Messgeräts so weit herabzusetzen, dass es zum Anschluss an eine 4...20mA 2-Leiterschleife geeignet ist, ohne in eine leistungsmäßige Unterversorgung zu gelangen, selbst wenn die Pulsrate verhältnismäßig hoch ist und in der 2-Leiterschleife aktuell nur ein Strom von 4mA fließt.

Gemäß einer Ausführungsform der Erfindung weist das Messgerät eine Steuerung, beispielsweise in Form des Mikroprozessors auf, durch welche sich der Zeitpunkt und die Dauer des festgelegten Zeitraums einstellen lassen, während dem der Lichtdetektor und/oder die Auswerteschaltung abgeschaltet sind.

Gemäß einer Ausführungsform der Erfindung stellt die Steuerung Zeitpunkt und Dauer in Abhängigkeit von einer aktuellen Zählrate des Messgeräts ein. Soll beispielsweise die Leistungsaufnahme und damit das Verhältnis von An- zu Abschaltzeit konstant gehalten werden, so kann bei hoher Zählrate die Abschaltzeit kürzer gewählt und damit die Meßgenauigkeit erhöht werden. An dieser Stelle sei darauf hingewiesen es sich bei der An-/Abschaltzeit um die Dauer des An-/Abgeschaltetseins und nicht um die Dauer des Übergangs von einem in den anderen Zustand handelt.

Gemäß einer weiteren Ausführungsform der Erfindung ist die Steuerung zum Einstellen der Dauer des festgelegten Zeitraums, während dem der Lichtdetektor und die Auswerteschaltung abgeschaltet sind, in Abhängigkeit von einer aktuellen, dem Messgerät zur Verfügung gestellten Versorgungsleistung ausgeführt. Ist die Versorgungsleistung verhältnismäßig hoch, kann der Zeitraum verhältnismäßig kurz gewählt werden. Ist hingegen die Versorgungsleistung verhältnismäßig gering, so wird der Zeitraum länger gewählt.

Insbesondere kann vorgesehen sein, dass die Länge des Zeitraums und der Zeitpunkt von beidem abhängt, nämlich der dem Messgerät aktuell zur Verfügung gestellten Versorgungsleistung und der aktuellen Zählrate.

Erfindungsgemäß ist die Steuerung zum Einstellen der Zeit zwischen dem Einschalten des Lichtdetektors und der Auswerteschaltung und dem Erzeugen des elektrischen Signals durch den Lichtdetektor ausgeführt, um dann daraus den Messwert zu bestimmen.

Es wird also nicht die Zeit zwischen einzelnen Lichtpulsen ermittelt, sondern die Zeit zwischen Anschalten und erstem Lichtpuls.

Es kann vorgesehen sein, dass unmittelbar nach der Detektion des ersten Lichtpulses der Lichtdetektor und die Auswerteschaltung wieder abgeschaltet werden, um Energie zu sammeln.

Gemäß einer Ausführungsform der Erfindung beträgt der festgelegte Zeitraum, während dem der Lichtdetektor und die Auswerteschaltung abgeschaltet sind, weniger als 10 Millisekunden, beispielsweise sogar weniger als 2 Millisekunden.

Gemäß einer weiteren Ausführungsform der Erfindung ist die Steuerung zum Bestimmen des Zeitpunkts für das Abschalten des Lichtdetektors und der Auswerteschaltung während des Betriebs des radiometrischen Messgeräts ausgeführt. Beispielsweise kann vorgesehen sein, dass Lichtdetektor und Auswerteschaltung abgeschaltet werden, sobald ein erster Lichtpuls detektiert wurde. Auch kann vorgesehen sein, dass abgeschaltet wird, sobald die für die Messung bereitstehende Energiemenge einen vorbestimmten Schwellwert unterschreitet. Hierdurch kann vorgebeugt werden, dass das Messgerät in ein Energiedefizit gelangt, was zu einer Fehlmessung führen könnte. Der Schwellwert kann insbesondere von der aktuellen Zählrate abhängen.

Gemäß einer weiteren Ausführungsform der Erfindung ist die Steuerung zum Abschalten des Lichtdetektors und der Auswerteschaltung unmittelbar nach einer erfolgten Auswertung eines vom Lichtdetektor erzeugten elektrischen Signals ausgeführt.

Insbesondere kann es sich bei dem radiometrischen Messgerät um ein Messgerät handeln, das zum Anschluss an eine 4...20mA 2-Leiterschleife ausgeführt ist, über welche es mit der für den Messbetrieb erforderlichen Energie versorgt wird und über welche der Datenaustausch mit einer externen Stelle erfolgt.

Zum Sammeln von Energie für den Betrieb des Lichtdetektors und der Auswerteelektronik während der Ausschaltphase des Lichtdetektors und der Auswerteschaltung ist ein Energiespeicher vorgesehen. Insbesondere können auch mehrere Energiespeicher vorgesehen sein, welche unterschiedliche Kapazitäten aufweisen. Beispielsweise kann vorgesehen sein, dass zunächst der Energiespeicher mit geringer Kapazität (schnell) geladen wird und daraufhin, falls noch ausreichend Zeit ist, ein entsprechend größer dimensionierter Langzeitenergiespeicher geladen wird. Dieser Langzeitenergiespeicher kann als Energienotreserve verwendet werden, falls das Messgerät zu einem bestimmten Zeitpunkt mehr Energie benötigt, als vorhanden ist und es ungewünscht ist, mit der Messung auszusetzen.

Ein weiterer Aspekt der Erfindung betrifft ein Verfahren zum Messen eines Füllstands / Grenzstands / Dichte / Durchsatzes mit einem radiometrischen Messgerät, bei welchem zunächst die auf einen Szintillator auftreffende radioaktive Strahlung in Licht umgewandelt wird. Daraufhin wird das Licht in ein elektrisches Signal umgewandelt. Dies erfolgt typischerweise durch einen Lichtdetektor in Form eines Photomultipliers oder einer Photodiode. Das elektrische Signal wird dann zur Bestimmung des Meßwerts ausgewertet.

Das Umwandeln der radioaktiven Strahlung in Licht und das Umwandeln des Lichtes in ein elektrisches Signal wird zeitweise ausgesetzt, indem die damit zusamenhängenden Einheiten abgeschaltet werden. Der abgeschaltete Zustand erstreckt sich über einen jeweils festgelegten Zeitraum. Danach erfolgt ein Anschalten der Einheiten und ein erneutes Umwandeln und Auswerten eines Lichtblitzes. Während das abgeschalteten Zeitraumes wird Energie für das Umwandeln und das Auswerten gesammelt, die beispielsweise über eine 2-Leiterschleife mit 4...20mA bereitgestellt wird.

Im Folgenden werden Ausführungsbeispiele der Erfindung unter Bezugnahme auf die Figur beschrieben.

### Kurze Beschreibung der Figur

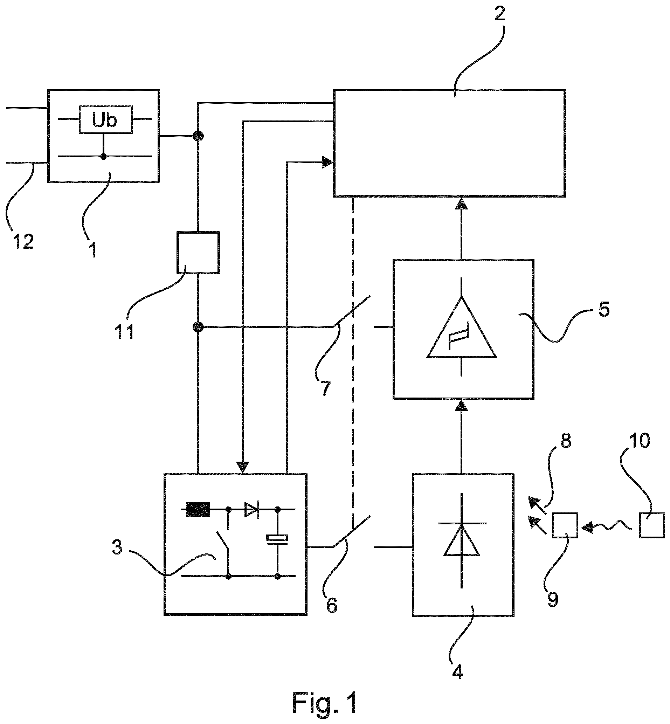

Fig. 1 zeigt ein Schaltdiagramm eines radiometrischen Messgeräts gemäß einem Ausführungsbeispiel der Erfindung.

### Detaillierte Beschreibung von Ausführungsbeispielen

Das in Fig. 1 schematisch dargestellte radiometrische Messgerät weist eine radioaktive Quelle 10 auf, welche beispielsweise an einem Container befestigt ist, der das Füllgut speichert. Die radioaktive Quelle 10 emittiert radioaktive Strahlung, welche den Container durchdringt und an der anderen Seite des Containers durch einen Szintillator 9 in einen oder mehrere Lichtpulse umgewandelt wird. Diese Lichtpulse 8 treffen auf einen Lichtdetektor 4, bei dem es sich beispielsweise um einen oder mehrere Photomultiplier, einen oder mehrere Siliziumphotomultiplier oder eine oder mehrere Photodioden handelt.

Der Lichtdetektor 4 wandelt das vom Szintillator 9 empfangene Licht 8 in ein elektrisches Signal um, welches er an die Auswerteschaltung 5 weiterleitet. Die Auswerteschaltung 5 wertet das elektrische Signal aus und leitet ihr Auswerteergebnis an die Steuerung 2, welche einen Mikroprozessor aufweisen kann, weiter. Der Mikroprozessor kann dann den berechneten Füllstand / Grenzstand / Dichte / Durchsatz über die 2-Leiterschleife 12 an ein externes Auswertegerät weiterleiten.

Das Messgerät erhält die für seinen Betrieb erforderliche Energie über die 2-Leiterschleife 12, welche an die Eingangsschaltung 1 angeschlossen ist, um eine geeignete Versorgungsspannung bereitzustellen. Die Eingangsschaltung 1 bildet die Schnittstelle zwischen der Zweidrahtleitung 12 und der Elektronik des Messgeräts, insbesondere dem Mikroprozessor 2 und dem Aufwärtswandler 3. Zwischen dem Aufwärtswandler 3 des Messgeräts und der Eingangsschaltung 1 kann ein Energiespeicher 11 in Form von einer oder mehreren Speicherkapazitäten oder Batterien vorgesehen sein, um die für den Betrieb des Messgeräts notwendige Energie zu sammeln, während der Lichtdetektor 4 und die Auswerteschaltung 5 abgeschaltet sind.

Für das Abschalten der Auswerteschaltung 5 ist ein Schalter 7 vorgesehen, der in der Verbindungsleitung zwischen dem Energiespeicher 11 und der Auswerteschaltung 5 angeordnet ist. Für das Abschalten des Lichtdetektors 4 ist ein zweiter Schalter 6 vorgesehen, der in der Verbindungsleitung zwischen dem Aufwärtswandler 3 und dem Lichtdetektor 4 vorgesehen ist. Die beiden Schalter 6, 7 können an einem digitalen Port des Mikroprozessors 2 angeschlossen sein und werden dann von dem Mikroprozessor, der weiter oben auch allgemein als "Steuerung" bezeichnet ist, gesteuert.

Bei dem in Fig. 1 dargestellten Gerät handelt es sich um ein radiometrisches Messgerät auf Szintillatorbasis, dessen Leitungsaufnahme so weit verringert werden kann (indem die beiden Schalter 6, 7 zu geeigneten Zeitpunkten geöffnet bzw. geschlossen werden), um einen Betrieb als 4...20mA 2-Leitergerät zu ermöglichen. Durch das in Fig. 1 dargestellte Schaltungsprinzip ist durch gezielte Abschaltung der Auswerteschaltung und/oder des Lichtdetektors eine nennenswerte Leistungsersparnis ohne wesentliche Einbußen hinsichtlich der Messempfindlichkeit, der Messgenauigkeit und der Messgeschwindigkeit möglich. Durch die Änderung der Schaltungstopologie können schnelle Verstärker und Komparatoren trotz ihrer hohen Leistungsaufnahme weiterhin verwendet werden.

Aufgrund des statistischen Charakters der Pulsrate, die von der radioaktiven Strahlung mithilfe des Szintillators und des Lichtdetektors erzeugt wird, ist es nicht ohne weiteres möglich, ohne Verlust an Messgenauigkeit Schaltungsteile im Messkanal zeitweise abzuschalten. Das in Fig. 1 gezeigte radiometrische Messgerät zieht jedoch nicht die Pulsrate zur Bestimmung des Messwerts heran, sondern die verstrichene Zeit zwischen einem Triggersignal, das beispielsweise vom Mikroprozessor 2 ausgeht und die Schalter 6, 7 schaltet, und dem Eintreffen eines Messpulses (bzw. eines auf einen vom Szintillator erzeugten Lichtpuls zurückgehenden elektrischen Signals) im Mikroprozessor. Es kann auch die verstrichene Zeit zwischen zwei oder mehr Meßpulsen zur Ermittlung des Meßwerts herangezogen werden.

Neben der Verlängerung der Lebensdauer einzelner Komponenten des Messgeräts ergibt sich hierdurch eine Leistungsersparnis, da wesentliche Energieverbraucher des Messgeräts über signifikante Zeitspannen abgeschaltet sind. Es kann vorgesehen sein, dass dabei nicht nur das lichtdetektierende Element (4), sondern auch die verhältnismäßig viel Leistung benötigende Auswerteelektronik 5 für bestimmte Zeitintervalle abgeschaltet wird. Dann wird die Zeit gemessen, die vom Einschalten der Auswerteelektronik bis zum Eintreffen des nächsten messbaren Pulses vergeht. Die Länge der "Abschalt-Zeitintervalle" kann so gewählt werden, dass bei minimal zur Verfügung stehender Eingangsleistung für das Messgerät noch ein regulärer Betrieb möglich ist. Es besteht dann keine Abhängigkeit von der aktuell zur Verfügung stehenden Eingangsleistung. Dieses Prinzip kann insbesondere auch in Schaltungen implementiert werden, die nicht auf stromsparende Bauteile angewiesen sind, um sie dazu zu befähigen, an eine 4...20mA 2-Leiterschleife angeschlossen zu werden.

Es kann vorgesehen sein, dass die Messparameter während des Betriebs des Messgeräts in Abhängigkeit von der Zählrate oder der zur Verfügung stehenden Leistung angepasst werden. Ist die zur Verfügung stehende Leistung entsprechend hoch, kann der Zeitraum, welcher zum Sammeln von Energie für den Betrieb des Lichtdetektors und der Auswerteschaltung nutzbar ist, auf Null gesetzt werden. In diesem Fall findet also eine kontinuierliche Messung statt.

Der Mikroprozessor 2 ist in einem Ausführungsbeispiel in der Lage, die Zeitspanne, während der der Lichtdetektor und die Auswerteschaltung abgeschaltet werden, während dem regulären Messbetrieb immer wieder aufs Neue festzulegen, beispielsweise indem er hierfür die aktuell zur Verfügung stehende Leistung und ggf. auch die aktuelle Zählrate berücksichtigt.

Das radiometrische Messgerät kann ausgeführt sein, selbstständig zu erkennen, ob die gemessene Pulsrate über einem bestimmten Schwellwert liegt. Dies kann beispielsweise aufgrund von Fremdstrahlung der Fall sein. Wird eine solch hohe Pulsrate erkannt, senkt das Gerät die Versorgungsspannung für das lichtdetektierende Element ab, sodass dessen Strom abgesenkt und damit eine vorzeitige Alterung oder gar Schädigung vermieden wird. In dieser Zeit kann das Gerät allerdings keine gültige Zählrate liefern. Nach einer bestimmten Zeit wird die Hochspannung wieder zugeschaltet, um feststellen zu können, ob sich das Gerät wieder im erlaubten Betriebsbereich befindet. Mit dem Zeitmessverfahren, welches oben beschrieben ist, und in welchem nicht die Zeit zwischen aufeinanderfolgenden Pulsen (Pulsrate), sondern die Zeit zwischen dem Triggersignal und dem auf einen Lichtblitz zurückgehenden elektrischen Signal gemessen wird, ist das Ermitteln der aktuellen Zählrate auch bei den oben beschriebenen, irregulären Bedingungen möglich. Es können prinzipiell beliebig hohe Pulsraten verarbeitet werden. Die Begrenzung liegt im Zeitauflösevermögen der steuernden Schaltung.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Radiometrisches Messgerät, aufweisend:
einen Szintillator (9) zur Umwandlung von auf den Szintillator auftreffender radioaktiver Strahlung in Licht (8);
einen Lichtdetektor (4) zur Umwandlung des Lichtes in ein elektrisches Signal;
eine Auswerteschaltung (5) zur Auswertung des elektrischen Signals zur Bestimmung eines Messwerts; einen Schalter (6, 7) zum zeitweisen Abschalten des Lichtdetektors und/oder der Auswerteschaltung zu jeweils einem festgelegten Zeitpunkt und für einen festgelegten Zeitraum, welcher zum Sammeln von Energie für den Betrieb des Lichtdetektors und der Auswerteschaltung nutzbar ist, wobei das radiometrische Messgerät eine Steuerung (2) zum Einstellen der Dauer des festgelegten Zeitraums aufweist, während dem der Lichtdetektor und die Auswerteschaltung abgeschaltet sind,
**dadurch gekennzeichnet,**
**dass** die Steuerung (2) zum Messen der Zeit zwischen dem Einschalten des Lichtdetektors (4) und der Auswerteschaltung (5) und dem Erzeugen des elektrischen Signals durch den Lichtdetektor ausgeführt ist, um daraus den Messwert zu bestimmen, und
wobei die Steuerung dazu eingerichtet ist, den festgelegten Zeitraum unabhängig von einer dem Messgerät zur Verfügung gestellten Versorgungsleistung einzustellen, sodass sich eine Leistungsaufnahme ergibt, die kleiner oder gleich der minimal zur Verfügung stehenden Leistung ist.

2. Radiometrisches Messgerät nach Anspruch 1,
wobei die Steuerung (2) zum Einstellen der Dauer des festgelegten Zeitraums, während dem der Lichtdetektor und die Auswerteschaltung abgeschaltet sind, in Abhängigkeit von einer aktuellen Zählrate des Messgeräts ausgeführt ist.

3. Radiometrisches Messgerät nach einem der vorhergehenden Ansprüche,
wobei der festgelegte Zeitraum, während dem der Lichtdetektor (4) und die Auswerteschaltung (5) abgeschaltet sind, weniger als 100 ms beträgt.

4. Radiometrisches Messgerät nach einem der vorhergehenden Ansprüche,
wobei die Steuerung (2) zum Bestimmen der Zeitpunkte für das Ab- und Anschalten des Lichtdetektors (4) und der Auswerteschaltung (5) während des Betriebs des radiometrischen Messgeräts ausgeführt ist.

5. Radiometrisches Messgerät nach einem der vorhergehenden Ansprüche,
wobei die Steuerung (2) zum Abschalten des Lichtdetektors (4) und der Auswerteschaltung (5) unmittelbar nach einer erfolgten Auswertung eines vom Lichtdetektor erzeugten elektrischen Signals ausgeführt ist.

6. Radiometrisches Messgerät nach einem der vorhergehenden Ansprüche, ausgeführt zum Anschluss an eine 4-20 mA Zweileiterschleife (12).

7. Radiometrisches Messgerät nach einem der vorhergehenden Ansprüche, weiter aufweisend:
einen Energiespeicher (11) zum Sammeln von Energie für den Betrieb des Lichtdetektors (4) und der Auswerteschaltung (5) während der Lichtdetektor und die Auswerteschaltung abgeschaltet sind.

8. Verfahren zum Messen eines Füllstands, eines Grenzstands, einer Dichte oder eines Durchsatzes mit einem radiometrischen Messgerät nach einem der Ansprüche 1 bis 7, aufweisend die Schritte:
Umwandeln von auf einen Szintillator (9) auftreffender radioaktive Strahlung in Licht (8);
Umwandeln des Lichtes in ein elektrisches Signal;
Auswerten des elektrischen Signals zur Bestimmung des Messwerts;
zeitweises Abschalten des Umwandelns und des Auswertens für jeweils einen festgelegten Zeitraum;
Sammeln von Energie für das Umwandeln und das Auswerten während dem festgelegten Zeitraum, wobei das radiometrische Messgerät eine Steuerung (2) zum Einstellen der Dauer des festgelegten Zeitraums aufweist, während dem der Lichtdetektor und die Auswerteschaltung abgeschaltet sind,
**dadurch gekennzeichnet,**
**dass** die Steuerung (2) zum Messen der Zeit zwischen dem Einschalten des Lichtdetektors (4) und der Auswerteschaltung (5) und dem Erzeugen des elektrischen Signals durch den Lichtdetektor ausgeführt ist, um daraus den Messwert zu bestimmen, und
wobei der Zeitraum unabhängig von einer dem Messgerät zur Verfügung gestellten Versorgungsleistung festgelegt wird, sodass sich eine Leistungsaufnahme ergibt, die kleiner oder gleich der minimal zur Verfügung stehende Leistung ist.

## Claims

1. A radiometric measuring device, comprising:
a scintillator (9) for converting radioactive radiation incident on the scintillator into light (8);
a light detector (4) for converting the light into an electrical signal;
an evaluation circuit (5) for evaluating the electrical signal to determine a measured value;
a switch (6, 7) for temporarily switching off the light detector and/or the evaluation circuit at a predetermined time and for a predetermined period of time in each case, which can be used to collect energy for the operation of the light detector and the evaluation circuit, the radiometric measuring device having a controller (2) for setting the duration of the predetermined period of time during which the light detector and the evaluation circuit are switched off,
**characterized in that** the controller (2) is designed to measure the time between the light detector (4) and the evaluation circuit (5) being switched on and the light detector generating the electrical signal in order to determine the measured value therefrom, and
wherein the controller is arranged to set the specified time period independently of any supply power provided to the measuring device, resulting in a power consumption that is less than or equal to the minimum available power.

2. The radiometric measuring device according to claim 1,
wherein the controller (2) is designed for setting the duration of the fixed period of time during which the light detector and the evaluation circuit are switched off, depending on a current count rate of the measuring device.

3. The radiometric measuring device according to any one of the preceding claims,
wherein the fixed period of time during which the light detector (4) and the evaluation circuit (5) are switched off is less than 100 ms.

4. The radiometric measuring device according to any one of the preceding claims,
wherein the controller (2) is designed to determine the points in time for switching on and off the light detector (4) and the evaluation circuit (5) during operation of the radiometric measuring device.

5. The radiometric measuring device according to any one of the preceding claims,
wherein the controller (2) is designed to switch off the light detector (4) and the evaluation circuit (5) immediately after an evaluation of an electrical signal generated by the light detector has taken place.

6. The radiometric measuring device according to any one of the preceding claims, designed for connection to a 4-20 mA two-wire loop (12).

7. The radiometric measuring device according to any one of the preceding claims, further comprising:
an energy storage (11) for collecting energy for the operation of the light detector (4) and the evaluation circuit (5) while the light detector and the evaluation circuit are switched off.

8. A method for measuring a fill level, a limit level, a density, or a throughput with a radiometric measuring device according to any one of claims 1 to 7, comprising the steps of:
converting radioactive radiation impinging on a scintillator (9) into light (8);
converting the light into an electrical signal;
evaluating the electrical signal to determine the measured value;
temporarily switching off the conversion and the evaluation for a fixed period of time in each case;
collecting energy for the conversion and the evaluation during the fixed period of time, wherein the radiometric measuring device comprises a control (2) for setting the duration of the fixed period of time during which the light detector and the evaluation circuit are switched off,
**characterized in that** the controller (2) is designed to measure the time between the light detector (4) and the evaluation circuit (5) being switched on and the light detector generating the electrical signal in order to determine the measured value therefrom, and
wherein the period of time is determined independently of any supply power provided to the measuring instrument, so that the power consumption is less than or equal to the minimum power available.

## Revendications

1. Appareil de mesure radiométrique, présentant :
un scintillateur (9) pour convertir un rayonnement radioactif incident sur le scintillateur en lumière (8) ;
un détecteur de lumière (4) pour convertir la lumière en un signal électrique ;
un circuit d'évaluation (5) pour évaluer le signal électrique afin de déterminer une valeur de mesure ;
un interrupteur (6, 7) pour la mise hors service temporaire du détecteur de lumière et/ou du circuit d'évaluation dans chaque cas à un instant défini et pour un laps de temps défini qui peut être utilisé pour collecter de l'énergie pour le fonctionnement du détecteur de lumière et du circuit d'évaluation, l'appareil de mesure radiométrique présentant un dispositif de commande (2) pour régler la durée du laps de temps défini pendant lequel le détecteur de lumière et le circuit d'évaluation sont mis hors service,
**caractérisé en ce que**
le dispositif de commande (2) est conçu pour mesurer le temps entre la mise en service du détecteur de lumière (4) et du circuit d'évaluation (5) et la génération du signal électrique par le détecteur de lumière, afin déterminer la valeur de mesure à partir de celui-ci, et
dans lequel le dispositif de commande est conçu pour régler le laps de temps défini indépendamment d'une puissance d'alimentation mise à la disposition de l'appareil de mesure, de sorte qu'il en résulte une puissance consommée qui est inférieure ou égale à la puissance minimale disponible.

2. Appareil de mesure radiométrique selon la revendication 1, dans lequel le dispositif de commande (2) est conçu pour régler la durée du laps de temps défini pendant lequel le détecteur de lumière et le circuit d'évaluation sont mis hors service en fonction d'un taux de comptage actuel de l'appareil de mesure.

3. Appareil de mesure radiométrique selon l'une des revendications précédentes,
dans lequel le laps de temps défini pendant lequel le détecteur de lumière (4) et le circuit d'évaluation (5) sont mis hors service est inférieur à 100 ms.

4. Appareil de mesure radiométrique selon l'une des revendications précédentes,
dans lequel le dispositif de commande (2) est conçu pour déterminer les instants de mise hors service et en service du détecteur de lumière (4) et du circuit d'évaluation (5) pendant le fonctionnement de l'appareil de mesure radiométrique.

5. Appareil de mesure radiométrique selon l'une des revendications précédentes,
dans lequel le dispositif de commande (2) est conçu pour mettre hors service le détecteur de lumière (4) et le circuit d'évaluation (5) immédiatement après qu'une évaluation d'un signal électrique généré par le détecteur de lumière a été effectuée.

6. Appareil de mesure radiométrique selon l'une des revendications précédentes,
conçu pour être connecté à une boucle à deux fils de 4-20 mA (12) .

7. Appareil de mesure radiométrique selon l'une des revendications précédentes, présentant en outre :
un accumulateur d'énergie (11) pour collecter de l'énergie pour le fonctionnement du détecteur de lumière (4) et du circuit d'évaluation (5) pendant que le détecteur de lumière et le circuit d'évaluation sont mis hors service.

8. Procédé de mesure d'un niveau de remplissage, d'un niveau limite, d'une densité ou d'un débit avec un appareil de mesure radiométrique selon l'une des revendications 1 à 7, présentant les étapes suivantes :
conversion d'un rayonnement radioactif incident sur un scintillateur (9) en lumière (8) ;
conversion de la lumière en un signal électrique ;
évaluation du signal électrique pour déterminer la valeur de mesure ;
mise hors service temporaire de la conversion et de l'évaluation dans chaque cas pour un laps de temps défini ;
collecte d'énergie pour la conversion et l'évaluation pendant le laps de temps défini, l'appareil de mesure radiométrique présentant un dispositif de commande (2) pour régler la durée du laps de temps défini pendant lequel le détecteur de lumière et le circuit d'évaluation sont mis hors service,
**caractérisé en ce que**
le dispositif de commande (2) est conçu pour mesurer le temps entre la mise en service du détecteur de lumière (4) et du circuit d'évaluation (5) et la génération du signal électrique par le détecteur de lumière, afin déterminer la valeur de mesure à partir de celui-ci, et
dans lequel le laps de temps est défini indépendamment d'une puissance d'alimentation mise à la disposition de l'appareil de mesure, de sorte qu'il en résulte une puissance consommée qui est inférieure ou égale à la puissance minimale disponible.
